Europäisches Patentamt

European Patent Office

Office européen des brevets

(11) Veröffentlichungsnummer : **0 097 259**
**B1**

# (12) EUROPÄISCHE PATENTSCHRIFT

(45) Veröffentlichungstag der Patentschrift :
**30.10.85**

(21) Anmeldenummer : **83105206.3**

(22) Anmeldetag : **26.05.83**

(51) Int. Cl.⁴ : **C 01 G 23/08, C 01 B 17/88,
F 27 D 17/00**

(54) Verfahren zur Energieeinsparung bei der TiO2-Herstellung.

(30) Priorität : **07.06.82 DE 3221477
18.08.82 DE 3230755**

(43) Veröffentlichungstag der Anmeldung :
**04.01.84 Patentblatt 84/01**

(45) Bekanntmachung des Hinweises auf die Patenterteilung : **30.10.85 Patentblatt 85/44**

(84) Benannte Vertragsstaaten :
**BE DE FR GB IT NL**

(56) Entgegenhaltungen :
**DE-A- 1 619 881
DE-C- 871 599
US-A- 3 105 744
US-A- 3 211 538
US-A- 3 848 860**

(73) Patentinhaber : **BAYER AG
Konzernverwaltung RP Patentabteilung
D-5090 Leverkusen 1 Bayerwerk (DE)**

(72) Erfinder : **Gerken, Rudolf, Dr.
Rather Strasse 79
D-4150 Krefeld (DE)**
Erfinder : **Lailach, Günter, Dr.
Bodelschwinghstrasse 23
D-4150 Krefeld (DE)**
Erfinder : **Schultz, Karl-Heinz, Dr.
Deswatinesstrasse 61
D-4150 Krefeld (DE)**

## Beschreibung

Die vorliegende Erfindung betrifft ein Verfahren zur Energieeinsparung bei der Herstellung von $TiO_2$-Pigmenten nach dem Sulfat-Verfahren, wobei insbesondere die Wärme der Kalzinierabgase ausgenutzt wird.

Die bei der Kalzinierung des Hydrolyseschlammes zu $TiO_2$ im Drehrohrofen entstehenden Abgase haben am Ofenaustritt Temperaturen von 400-500 °C. Ihr Wärmeinhalt besteht zu etwa 50 % aus fühlbarer Wärme und zu etwa 50 % aus latenter Wärme (Verdampfungswärme des Wassers). Wegen des hohen Staubgehaltes sowie des Gehaltes an $SO_2$ und $SO_3$ in diesen Kalziniergasen wird bisher in der Praxis auf eine Ausnutzung der fühlbaren Wärme verzichtet.

Derzeit werden die Kalziniergase mit Wasser in Waschtürmen oder Venturi-Wäschern abgeschreckt und gleichzeitig ein Teil des $SO_3$ und die Hauptmenge des $TiO_2$ ausgewaschen. Das $TiO_2$ wird dann abgetrennt und gegebenenfalls in den Prozeß zurückgeführt.

Die Aufgabe der vorliegenden Erfindung ist es nun, den Wärmeinhalt der heißen Kalziniergase effektiv auszunutzen und den Gesamtprozeß wirtschaftlicher zu gestalten.

Überraschenderweise wurde nun ein Verfahren gefunden, durch das bis zu 40 % der für die Kalzinierung des Hydrolyseschlammes bei der Herstellung von $TiO_2$-Pigmenten nach dem Sulfatverfahren eingesetzten Energie eingespart werden können.

Dieses Verfahren zur Energieeinsparung bei der $TiO_2$-Herstellung nach dem Sulfat-Verfahren unter Rückführung der Kalzinierabgase ist dadurch gekennzeichnet, daß die bei der Kalzination anfallenden staubhaltigen Kalziniergase bei einer Temperatur oberhalb 320 °C gereinigt und anschließend ganz oder teilweise in einem direkten Gaskühler, beispielsweise Strahlwäscher, Venturiwäscher oder Waschturm, mit im Kreislauf geführter 70 bis 80 %iger Schwefelsäure in Berührung gebracht werden, wobei Schwefelsäure eines geringeren $H_2SO_4$-Gehalt in solchen Mengen in das System eingespeist wird, daß die Temperatur des Säurekreislaufs konstant bleibt und die Kreislaufsäuremenge durch entsprechende Ausspeisung höher konzentrierter Säure konstant gehalten wird.

Vorzugsweise erfolgt die Reinigung der staubhaltigen Kalziniergase bei Temperaturen oberhalb 320 °C durch Filter oder elektrostatische Gasreinigung (EGR). Das dabei abgetrennte $TiO_2$ kann dann in die Kalzinierung zurückgeführt werden.

Das erfindungsgemäße Verfahren besteht darin, daß die fühlbare Wärme des aus dem Kalziniersystem abgeleiteten gereinigten Abgasstromes zur wirtschaftlichen Aufkonzentrierung von vorkonzentrierter ca. 65 %iger Schwefelsäure auf maximal 85 % ausgenutzt werden.

Dazu werden die gereinigten Kalziniergase ganz oder teilweise in einem direkten Gaskühler, beispielsweise Strahlwäscher, Venturiwäscher oder Waschturm, mit im Kreislauf geführter 70-85 %iger Schwefelsäure in Berührung gebracht, wobei Schwefelsäure eines geringeren $H_2SO_4$-Gehaltes in solchen Mengen in das System eingespeist wird, daß die Temperaturen des Säurekreislaufs konstant bleibt und die Kreislaufsäuremenge durch entsprechende Ausspeisung höher konzentrierter Säure (75-80 %ig) gehalten wird.

Prinzipiell kann auf diese Weise jede Schwefelsäure auf Konzentrationen von etwa 85 % gebracht werden. Besonders vorteilhaft erweist sich allerdings die Aufkonzentrierung von 60 bis 70 %iger, vorzugsweise 65 %iger, Schwefelsäure, dir durch Eindampfung von $TiO_2$-Dünnsäure und Abtrennung der auskristallisierten Salze gewonnen wurde.

Da diese Säure noch 2-5 % Metallsulfate enthält, bestehen sonst nur begrenzte Möglichkeiten für ihre Wiederverwendung. Die Rückführung der gesamten anfallenden Säure zum Titanerzaufschluß ist nicht möglich, weil beim Abmischen mit Oleum auf die erforderliche Konzentration von ca. 90 % $H_2SO_4$ mehr Säure anfällt, als für den Aufschluß benötigt wird. Durch weitere Wasserverdampfung aus der 65 %igen Säure bis zu einem Gehalt von ca. 80 % $H_2SO_4$ wird nun die Rückführung der gesamten rezirkulierbaren Säure ermöglicht.

Durch den Salzgehalt der Säure verbieten sich auch für die weitere Eindampfung Verfahren mit indirekter Wärmeübertragung. Die direkte Eindampfung im Tauchbrenner-Verdampfer scheidet auch aus, weil durch die ca. 1 500 °C heißen Rauchgase bei Säurekonzentrationen von über 70 % erhebliche Mengen Schwefelsäure zu $SO_2$, $H_2O$ und $O_2$ gespalten werden.

Besonders vorteilhaft gelingt nun die Aufkonzentrierung unter Einsatz des erfindungsgemäßen Verfahrens. Die 400-500 °C heißen gereinigten Kalziniergase werden in Apparaturen gebracht, die es erlauben, die zu konzentrierende Säure mit den Gasen im Gleichstrom oder Gegenstrom in Berührung zu bringen. Solche Apparaturen sind z. B. Venturiwäscher, Strahlwäscher, Rieseltürme mit Düsenrost. Die Apparaturen sollten möglichst keine Einbauten aufweisen, die durch eventuell geringe Mengen ausfallender Salze blockiert werden können.

In dieser Verfahrenstufe können bis zu 25 % der für die $TiO_2$-Kalzinierung eingesetzten Energie nutzbar wiederverwendet werden, indem die Abgase auf 160 bis 180 °C abgekühlt werden.

Ein weiterer Vorteil liegt in der guten Absorptionsfähigkeit dieser heißen Säure gegenüber $SO_3$. Dieses wird somit in den Prozeß rezirkuliert.

In einer weiteren Ausführungsform des erfindungsgemäßen Verfahrens wird die Wärme der 160 bis 180 °C heißen Abgase zur Erhitzung und eventuell teilweisen Eindampfung von Dünnsäure ausgenutzt. Dabei werden die gereinigten Kalziniergase, die durch den Kontakt mit der 70 bis 85 %-igen Schwefelsäure auf einen Temperaturbereich von 150 bis 250 °C abgekühlt worden sind, in einem Waschturm oder einem der oben beschriebenen Wäscher in direkten Kontakt mit Dünnsäure aus dem TiO$_2$-Hydrolyseprozeß gebracht. Dabei werden die geringen Mengen H$_2$SO$_4$ absorbiert, die das Abgas bei 180 °C aus der ca. 80 %igen Säure aufgenommen hat.

Genauer werden die auf 150-250 °C abgekühlten Kalziniergase in einem weiteren direkten Gaskühler so mit im Kreislauf geführter Dünnsäure aus der Titanylsulfathydrolyse auf 80 bis 100 °C abgekühlt, daß die Dünnsäurezufuhr zum Kreislauf maximal so groß ist, daß der Wasserdampfpartialdruck über der Kreislaufsäure und im gekühlten Abgas gleich ist.

In diesem letzten Verfahrensschritt können bis zu 10 % der für die Kalzinierung eingesetzten Energie wieder genutzt werden.

Der Vorteil gegenüber bekannten Bestrebungen, die Wärmeenergie der Kalzinierbagase zur Dünnsäureaufkonzentrierung auszunutzen, liegt außer den bereits beschriebenen Vorteilen vor allem darin, daß es vermieden wird, die Dünnsäure bis zu einer so hohen Konzentration einzudampfen, daß die Sulfate kristallisieren. Durch die zweistufige Wärmenutzung wird es ermöglicht, bei hohem Temperaturniveau die relativ salzarme, aber anders schwer eindampfbare 65 %ige Säure auf ca. 80 % aufzukonzentrieren, während die stark sulfathaltige Dünnsäure mit relativ kaltem Abgas in Berührung gebracht wird. Somit besteht kein Risiko, daß die Apparatur durch Sulfatabscheidung außer Funktion gesetzt wird, wie dies beim Kontakt mit 400 °C heißen Abgasen leicht möglich ist.

Die Vorteile des erfindungsgemäßen Verfahrens können dadurch wesentlich vergrößert werden, daß ein Teil der gereinigten Kalziniergase vor der Wärmenutzung zur Schwefelsäureeindampfung abgetrennt und anstelle von Sekundärluft in den Kalzinierofen zurückgeführt wird, während entsprechend US-A-3 105 744 ungereinigte Kalziniergase rückgeführt werden.

Die beschriebenen erfindungsgemäßen Schritte zur Ausnutzung der fühlbaren Wärme der Kalzinierabgase sind einzeln wirksam, bringen in Kombination aber die deutlichste Wirkung. Es ist somit besonders vorteilhaft, die erfindungsgemäßen Schritte in Kombination auszuführen.

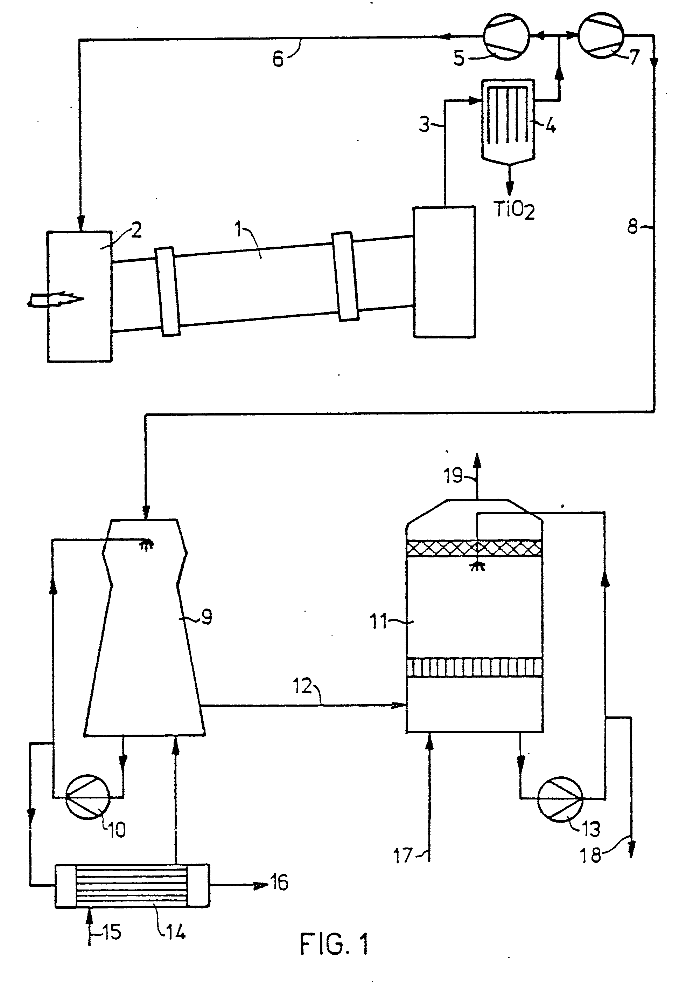

Zur Veranschaulichung des erfindungsgemäßen Verfahrens dient Fig. 1. Hier wird eine mögliche Variante anhand eines Schemas beschrieben. Die gewählte Darstellung bedeutet keine Einschränkung bezüglich der erfindungsgemäß möglichen Apparate und Produktstromführungen.

In die Brennkammer (2) des Kalzinierofens (1) wird Erdgas oder Heizöl mit Primärluft eingebrannt. Die dabei entstehenden Rauchgase werden mit so viel Abgas (6) gemischt, daß im Drehrohr des Ofens das gewünschte Temperaturprofil entsteht. Das aus dem Ofen austretende Abgas (400-500 °C) (3) wird von den Gebläsen (5) und (7) durch die Heiß-EGR (4) gesaugt, in der TiO$_2$-Staub weitgehend abgeschieden wird. Mittels Gebläse (5) wird die zur Einstellung des Ofenprofils erforderliche Abgasmenge (11) zur Brennkammer (2) gefördert. Das Gebläse (7) fördert die effektiv aus dem Kalzinierprozeß anfallende Abgasmenge (8) zum Strahlwäscher (9). In diesen Wäscher wird mittels Pumpe (10) ständig ca. 80 %ige Säure im Kreislauf eingedüst. Zur Aufrechterhaltung der Konzentration wird 65 %ige Säure (15) in den Kreislauf eingespeist und die entsprechende Menge 80 %ige Säure (16) entnommen. Diese ca. 180 °C heiße 80 %ige Säure (16) kann in Tantal- oder Glaswärmetauschern (14) durch die eingespeiste 65 %ige Säure (15) auf unter 100 °C abgekühlt werden. Dadurch wird nochmals ein beachtlicher Teil der Wärmeenergie des Gesamtsystems nutzbar gemacht. Die im Kontakt mit der Säure von ca. 400 °C auf ca. 180 °C abgekühlten Abgase (12) gelangen aus dem Strahlwäscher (9) in den Waschturm (11), in dem sie durch im Kreislauf gepumpte Dünnsäure auf ca. 80 °C abgekühlt werden (19). In die mittels Pumpe (13) im Kreislauf geführte Dünnsäure wird kalte Dünnsäure (17) so eingespeist, daß der Taupunkt der Abgase nicht unterschritten wird. Entsprechend der Dünnsäureeinspeisung wird heiße Dünnsäure (18) abgezogen.

Im folgenden wird die Erfindung beispielhaft erläutert. Dabei beziehen sich alle Volumenangaben der Gase auf Normalzustands-Werte.

Beispiel

In einen Kalzinierofen mit einer Kapazität von 4 t TiO$_2$/h werden 1 440 m$^3$/h Erdgas (entsprechend 44 × 10$^9$ J/h) mit 14 000 m$^3$ Primärluft eingebrannt und 15 700 m$^3$/h Sekundärluft (60 °C) in die Brennkammer (2) eingespeist. Die Abgastemperatur beträgt 410 °C, die Abgasmenge 43 600 m$^3$/h (feucht) mit einem H$_2$O-Gehalt von 24,4 Vol.%.

Durch Ersatz der Sekundärluft durch gereinigtes Abgas von 400 °C verringert sich die erforderliche Erdgasmenge von 1 440 m$^3$/h auf 1 220 m$^3$/h. Das entspricht einer Energieeinsparung von 6,9 × 10$^9$ J/h oder 1,725 × 10$^9$ J/t TiO$_2$, entspr. 15,7 %. Die aus dem Kalzinierprozeß mittels Gebläse (7) abgezogene Abgasmenge (8) beträgt nur noch 28 000 m$^3$/h (feucht), wobei der H$_2$O-Gehalt von 24,4 auf 36,7 Vol.% gestiegen ist.

Das 400 °C heiße Abgas (8) wird mittels Gebläse in einen Strahlwäscher (9) gefördert, in den im Gleichstrom mittels einer Kreislaufpumpe (10) 78 %ige Schwefelsäure mit 4,6 % gelösten Metallsulfaten eingedüst wird. In den Sumpf des Wäschers werden 11,0 t/h 65 %ige H$_2$SO$_4$ mit 4,0 % gelösten Sulfaten eingespeist (Temperatur 40 °C). Aus dem Kreislauf werden 9,2 t/h 78 %ige Säure abgezogen. Die Wasserverdampfung beträgt 1,8 t/h. Die vom Abgas abgegebene Energie beträgt 8,3 × 10$^9$ J/h oder 2,08 × 10$^9$/t TiO$_2$, entsprechend 18,8 % des ursprünglichen Energiebedarfs. Das aus dem Wäscher austretende ca. 180 °C heiße Abgas hat einen H$_2$O-

Gehalt von 41,1 Vol.% entsprechend einem Taupunkt von 77 °C.

Wenn der nutzbare Wärmeinhalt der 80 %igen Säure durch Kühlung von 180 °C auf 60 °C (entspr. $2,25 \times 10^9$ J/h) an die eingespeiste 65 %ige Säure abgeführt wird, wird letztere mit 132 statt 40 °C in den Kreislauf des Wäschers (9) eingespeist. Bei gleicher Wasserverdampfung aus der 65 %igen Säure ergibt sich dann für das Abgas (12) eine Temperatur von 240 statt 180 °C.

Die 180 °C heißen Abgase (12) aus dem Strahlwäscher (9) werden in den mit einem Düsenrost ausgerüsteten Waschturm (11) geleitet, in dem sie im Gegenstrom mit Dünnsäure bedüst werden, die 23 % $H_2SO_4$ und 15 % Metallsulfate enthält. Bei der Kreislauftemperatur von 88 °C beträgt der Dampfdruck der Dünnsäure ca. 410 mbar und entspricht somit dem $H_2O$-Gehalt des Abgases (12) wodurch eine $H_2O$-Kondensation aus dem Abgas vermieden wird. In den Sumpf des Waschturmes (11) werden 23 t/h Dünnsäure mit 40 °C eingespeist, aus dem Kreislauf 23 t/h mit 88 °C abgeführt zur Dünnsäureeindampfanlage. Die aus dem Abgas an die Dünnsäure abgegebene Wärmemenge beträgt $3,4 \times 10^9$ J/h oder $0,85 \times 10^9$ J/t $TiO_2$, entsprechend 7,7 % der ursprünglichen Kalzinierenergie.

Wird das Abgas (12) mit 240 °C statt 180 °C in den Waschturm (11) eingeleitet, werden bei gleicher Dünnsäureeinspeisung 0,85 t $H_2O$ aus der Dünnsäure verdampft ; der $H_2O$-Gehalt des Abgases steigt von 41,1 auf 43,1 Vol.% ; es stellt sich eine Temperatur von ca. 90 °C ein.

Insgesamt können entsprechend diesem Beispiel 47,3 % der Kalzinierenergie eingespart bzw. wieder verwendet werden.

### Patentansprüche

1. Verfahren zur Energieeinsparung bei der $TiO_2$-Herstellung nach dem Sulfatverfahren unter Rückführung der Kalzinierabgase, dadurch gekennzeichnet, daß die bei der Kalzination anfallenden staubhaltigen Kalziniergase bei einer Temperatur oberhalb 320 °C gereinigt und anschließend ganz oder teilweise in einem direkten Gaskühler, beispielsweise Strahlwäscher, Venturiwäscher oder Waschturm, mit im Kreislauf geführter 70 bis 85 %iger Schwefelsäure in Berührung gebracht werden, wobei Schwefelsäure eines geringeren $H_2SO_4$-Gehaltes in solchen Mengen in das System eingespeist wird, daß die Temperatur des Säurekreislaufes konstant bleibt und die Kreislaufsäuremenge durch entsprechende Ausspeisung höher konzentrierter Säure konstant gehalten wird.

2. Verfahren gemäß Anspruch 1, dadurch gekennzeichnet, daß 60 bis 70 %ige, vorzugsweise 65 %ige, aus $TiO_2$-Dünnsäure rückgewonnene Schwefelsäure, die 2 bis 5 % Metallsulfate enthalten kann, in das System eingespeist wird.

3. Verfahren gemäß einem der Ansprüche 1 oder 2, dadurch gekennzeichnet, daß die aus dem Kreislauf abgezogene Säure 75 bis 80 %ige Schwefelsäure ist.

4. Verfahren gemäß einem der Ansprüche 1 bis 3, dadurch gekennzeichnet, daß die abgezogene 75 bis 80 %ige Schwefelsäure durch indirekte Kühlung in Glas- oder Tantalwärmetauschern mit der eingespeisten 60 bis 70 %igen Säure auf Temperaturen unter 100 °C abgekühlt wird.

5. Verfahren gemäß einem der Ansprüche 1 bis 4, dadurch gekennzeichnet, daß die gereinigten Kalziniergase durch die Berührung mit der 70 bis 85 %igen Schwefelsäure auf einen Temperaturbereich von 150 bis 250 °C abgekühlt werden.

6. Verfahren gemäß einem der Ansprüche 1 bis 5, dadurch gekennzeichnet, daß die auf 150 bis 250 °C abgekühlten Kalziniergase in einem weiteren direkten Gaskühler mit im Kreislauf geführter Dünnsäure aus der Titanylsulfathydrolyse auf 80 bis 100 °C abgekühlt werden, wobei die Dünnsäurezufuhr zum Kreislauf maximal so groß ist, daß Wasserdampfpartialdruck über die Kreislaufsäure und im gekühlten Abgas gleich sind.

### Claims

1. Process for saving energy in the production of $TiO_2$ by the sulphate process with recycling of the calcination off-gases, characterised in that the dust-containing calcination gases formed during the calcination are purified at a temperature higher than 320 °C and then all or part of them are brought into contact with circulated 70 to 85 % strength sulphuric acid in a direct gas cooler, for example a jet washer, Venturi washer or washing tower, sulphuric acid with a lower $H_2SO_4$ content being introduced into the system in such quantities that the temperature of the acid cycle remains constant and the quantity of acid circulated is kept constant by the removal of a corresponding quantity of more highly concentrated acid.

2. Process according to Claim 1, characterised in that 60 to 70 % strength, preferably 65 % strength, sulphuric acid which has been recovered from $TiO_2$ spent sulphuric acid and can contain 2 to 5 % of metal sulphates, is introduced into the system.

3. Process according to one of Claims 1 or 2, characterised in that the acid removed from the cycle is 75 to 80 % strength sulphuric acid.

4. Process according to one of Claims 1 to 3, characterised in that the 75 to 80 % strength sulphuric acid removed is cooled to temperatures below 100 °C by indirect cooling in glass or tantalum heat exchangers with the aid of the 60 to 70 % strength acid introduced.

5. Process according to one of Claims 1 to 4, characterised in that the purified calcination gases are cooled to a temperature range of 150 to 250 °C by the contact with the 70 to 85 % strength sulphuric acid.

6. Process according to one of Claims 1 to 5, characterised in that the calcination gases cooled to 150 to 250 °C are cooled to 80 to 100 °C in an additional direct gas cooler with the aid of circulated spent sulphuric acid from the hydrolysis of titanyl sulphate, the spent sulphuric acid being introduced into the cycle in at most such a quantity that the water vapour partial pressure over the circulated acid and in the cooled off-gas is the same.

**Revendications**

1. Procédé pour économiser de l'énergie dans la production de TiO₂ par le procédé au sulfate avec recyclage des gaz résiduaires de calcination, caractérisé en ce que les gaz contenant des poussières qui se forment lors de la calcination sont épurés à une température au-dessus de 320 °C, puis la totalité ou une partie de ces gaz est mise en contact avec de l'acide sulfurique à 70-85 % en circulation dans un refroidisseur direct de gaz, par exemple un appareil laveur à jet, un appareil laveur à venturi ou une tour de lavage, en injectant dans le circuit de l'acide sulfurique à faible teneur en H₂SO₄ en quantités telles que la température du circuit d'acide reste constante et que la quantité d'acide en circulation soit maintenue constante par un rejet correspondant d'acide plus fortement concentré.

2. Procédé suivant la revendication 1, caractérisé en ce qu'on injecte dans le circuit de l'acide sulfurique de récupération de l'acide de dilution de TiO₂, à 60-70 %, de préférence à 65 %, qui peut contenir 2 à 5 % de sulfates de métaux.

3. Procédé suivant l'une des revendications 1 ou 2, caractérisé en ce que l'acide déchargé du circuit est de l'acide sulfurique à 75-80 %.

4. Procédé suivant l'une des revendications 1 à 3, caractérisé en ce que l'acide sulfurique à 75-80 % qui est déchargé est refroidi à des températures inférieures à 100 °C au moyen de l'acide à 60-70 % injecté, par refroidissement indirect dans des échangeurs de chaleur en verre ou en tantale.

5. Procédé suivant l'une des revendications 1 à 4, caractérisé en ce que les gaz de calcination épurés sont refroidis dans un intervalle de température de 150 à 250 °C par leur contact avec l'acide sulfurique à 70-85 %.

6. Procédé suivant l'une des revendications 1 à 5, caractérisé en ce que les gaz de calcination refroidis à 150-250 °C subissent un refroidissement à 80-100 °C dans un autre refroidisseur direct de gaz avec l'acide de dilution recyclé provenant de l'hydrolyse du sulfate de titanyle, la quantité recyclée d'acide de dilution étant au maximum assez grande pour que la pression partielle de vapeur d'eau soit la même au-dessus de l'acide recyclé et dans le gaz résiduaire refroidi.

FIG. 1

0 097 259